## Europäisches Patentamt
## European Patent Office
## Office européen des brevets

(19)

(11) Veröffentlichungsnummer: **0 016 423**
**B1**

(12) **EUROPÄISCHE PATENTSCHRIFT**

(45) Veröffentlichungstag der Patentschrift:
07.07.82

(51) Int. Cl.³: **G 01 N 27/46**

(21) Anmeldenummer: 80101306.1

(22) Anmeldetag: 13.03.80

(54) **Gasdetektor.**

(30) Priorität: 23.03.79 DE 2911548

(43) Veröffentlichungstag der Anmeldung:
01.10.80 Patentblatt 80/20

(45) Bekanntmachung des Hinweises auf die Patenterteilung:
07.07.82 Patentblatt 82/27

(84) Benannte Vertragsstaaten:
**BE CH DE FR GB IT NL SE**

(56) Entgegenhaltungen:
**DE-A-2 625 895**
**FR-A-2 207 604**
**FR-A-2 334 101**
**FR-A-2 353 846**
**FR-A-2 372 430**
**US-A-3 258 415**
**US-A-3 510 420**
**US-A-3 847 777**

(73) Patentinhaber: **BAYER AG, Zentralbereich Patente, Marken und Lizenzen, D-5090 Leverkusen 1, Bayerwerk (DE)**

(72) Erfinder: **Deprez, Jacques, Birkenweg 3, D-5020 Frechen (DE)**
Erfinder: **Drope, Eckard, Dr., Wiener Weg 58, D-5000 Köln 40 (DE)**
Erfinder: **Soth-Haas, Gabriele, Im Kalkfeld 16, D-5090 Leverkusen 3 (DE)**

ACTORUM AG

# Gasdetektor

Die Erfindung geht aus von einem Gasdetektor mit einem Messkopf, der einen auf gegenüberliegenden Seiten mit Elektroden versehenen Elektrolyten und einen der einen Elektrode vorgeordneten Diffusionsraum aufweist, welcher über eine Eintrittsblende und eine Filtermembran mit der zu überwachenden Gasatmosphäre in Verbindung steht.

Ein derartiger Gasdetektor ist z.B. in der DE-C 26 21 676 beschrieben. Er beruht auf dem Prinzip, dass die durch Diffusion in den Sensor eintretenden und auf die Sensoroberfläche auftreffenden Moleküle des Messgases aufgrund einer physikalisch-chemischen Reaktion an der Sensoroberfläche erfasst und gezählt werden. Die Reaktion spielt sich dabei an einer Dreiphasengrenze (Elektrolyt - Elektrode - Gasraum) ab. Wesentlich ist dabei, dass die gezählten Moleküle abtransportiert werden, da sie sonst doppelt gezählt werden. Der Abtransport geschieht bei elektrochemischen Sensoren dadurch, dass die Messkomponenten-Moleküle an der Dreiphasengrenze chemisorbiert werden. Aufgrund der Natur des Messeffektes ist der Messbereich einer elektrochemischen Messzelle nach oben und unten begrenzt. Die untere Grenze entspricht der Nachweisgrenze und stellt daher die maximale Empfindlichkeit dar. Die obere Grenze ist dadurch gegeben, dass der Abtransport der Messgasmoleküle an der Dreiphasengrenze nicht mehr mit dem Antransport Schritt hält, so dass Nichtlinearitäten und Sättigungserscheinungen auftreten.

Die automatische Gasanalyse hat einmal durch die Prozessanalyse und zum anderen durch die Umweltmesstechnik in den letzten Jahren eine wesentliche Weiterentwicklung erfahren. Dabei ist für die Prozessanalyse die Zuverlässigkeit und Präzision von grosser Bedeutung, während bei der Umweltmesstechnik die hohe Empfindlichkeit im Vordergrund steht. Neuerdings werden Gasanalysenmethoden im steigenden Masse auch in der Betriebspraxis für den Arbeitsschutz eingesetzt. Entsprechend dem jeweiligen Einsatzzweck muss der Messbereich an das Messproblem angepasst werden. Dies bedeutet, dass innerhalb des oben angegebenen prinzipiellen Messumfanges ein auf das jeweilige Messproblem zugeschnittener Teilbereich ausgewählt werden muss. Dabei muss darauf geachtet werden, dass sich die Ansprechzeit und die Regenerationszeit der Messzelle nicht verändert. Das zeitliche Verhalten sollte also unabhängig vom Messbereich stets unverändert bleiben.

Eine bekannte Methode zur Anpassung des Messbereiches an eine bestimmte Problemlösung besteht darin, dass das Messgas mit einem neutralen Gas, z.B. Luft, mit bekannter Konzentration verdünnt wird, bevor es an den Sensor gelangt.

Diese Methode ist jedoch apparativ aufwendig und verschlechtert auch in der Regel das Zeitverhalten in der Messzelle. Ferner ist es bekannt, den Messbereich mit Hilfe der Charakteristik des auf die Messzelle folgenden elektronischen Verstärkers anzupassen (z.B. logarithmischer Verstärker). Man erhält auf diese Weise zwar ein Gerät, das einen sehr weiten Messbereich umfasst. Problematisch ist jedoch dabei die hohe Belastung des Sensors, die zu verkürzten Standzeiten führen kann, und der Verlust des Nullpunktes. Bei Diffusionsmessköpfen mit kurzen Ansprechzeiten besteht ausserdem die Gefahr der Vergiftung durch eine zu hohe Messgaskonzentration, die zu einer grossen Regenerationszeit führt.

Eine andere Möglichkeit zur Unterteilung in verschiedene Messbereiche besteht darin, dass die wirksame Sensoroberfläche mit verschieden grossen Blenden abgedeckt wird. Eine Vorrichtung dieser Art, die mit einer vor der Sensoroberfläche verschiebbaren Blende mit zwei unterschiedlichen Öffnungen arbeitet, ist in der DE-A-26 25 895 beschrieben. Auch hier tritt das Problem der Vergiftung des Elektrolyten auf, wenn der Elektrolyt durch eine zu hohe Messgaskonzentration übersättigt wird. Dieser Fall kann bei kleinen Blendenöffnungen (unempfindlicher Messbereich) leicht eintreten. Die Sensoroberfläche ist hier ohne Vorschaltung eines Diffusionsraumes direkt der zu untersuchenden Atmosphäre ausgesetzt. Die erwähnte Übersättigung kann die Stabilität und die Lebensdauer der elektrochemischen Messzelle negativ beeinflussen.

In der FR-A-23 34 101 wird eine elektrochemische Sauerstoffmesszelle mit vorgeschaltetem Diffusionsraum beschrieben. Durch Anlegen einer Gleichspannung wird der auf die Sensoroberfläche auftreffende Sauerstoff durch den Elektrolyt hindurch auf die andere Seite zur Gegenelektrode gepumpt. Auf diese Weise entsteht ein Druckgradient im Diffusionsraum, der für den Antransport der Sauerstoffmoleküle sorgt. Massgebend ist dabei der Druckgradient an der Eintrittsblende am Diffusionsraum. Die Pumpleistung ist normalerweise im Verhältnis zur angebotenen Sauerstoffkonzentration so hoch, das keine Sättigungserscheinungen und demzufolge auch keine Überlastungseffekte des Sensors auftreten. Bei elektrochemischen Messzellen mit einer Dreiphasengrenze, die auf dem Prinzip des Nernst'schen Konzentrationselementes beruhen, lässt sich das Anpassungsproblem hinsichtlich einer Messung in verschiedenen Konzentrationsbereichen mit Hilfe von Einzelblenden nicht zufriedenstellend lösen. Dies ist darauf zurückzuführen, dass bei gegebener Öffnung der Einzelblende die zum Messsignal beitragende Sensoroberfläche, insbesondere bei relativ kurzem Abstand zwischen Blende und Sensoroberfläche, beschränkt ist. Ausserdem kann die Verwendung einer einzigen Eintrittsöffnung am Diffusionsraum zu einer ungleichförmigen Stromdichte über die Sensorelektrode und damit zu einer ungleichmässigen Flächenbelastung führen. In diesem Fall besteht wiederum die Gefahr, dass Teilbereiche der Sensoroberfläche mit der Messkomponente übersättigt werden.

In neuerer Zeit sind auch Geräte mit Diffusionsmessköpfen bekannt geworden, bei denen die Anpassung des Messbereiches an den jeweiligen Messbereich durch Vorschalten von Kapillar- oder Permeationsmembranen erfolgt. Durch solche Membranen wird eine definierte Abschwächung des Diffusionsstromes zum Sensor erreicht. Von Nachteil ist dabei die Verschlechterung des Zeitverhaltens, eine ausgeprägte Temperaturabhängigkeit und — bedingt durch die grosse Oberfläche des Membrankörpers — eine Zersetzung von kritischen Gasen, wie z.B. Phosgen und Ozon.

Der Erfindung liegt die Aufgabe zugrunde, einen Gasdetektor auf der Basis einer elektrochemischen Messzelle mit vorgegebenen physikalischen Daten (Empfindlichkeit und Zeitverhalten) zu schaffen, der eine einfache und schnelle Anpassung des Messbereiches an das jeweilige Messproblem ermöglicht. Die Einstellung des Messbereiches muss dabei in jedem Falle reproduzierbar sein und soll das durch den Sensor vorgegebene Zeitverhalten nicht wesentlich beeinflussen.

Diese Aufgabe wird, ausgehend von dem eingangs beschriebenen Gasdetektor, erfindungsgemäss dadurch gelöst, dass eine der Zahl unterschiedlicher Messbereiche entsprechende Zahl auswechselbarer Blendenköpfe vorgesehen ist, die jeweils mit einer Vielzahl von Öffnungen versehen sind, deren Zahl und/oder Querschnitt den Gesamtöffnungsquerschnitt der Eintrittsblende bestimmen, deren Längsausdehnung 1 klein ist im Vergleich zu ihrem Durchmesser d und deren Durchmesser d klein ist gegenüber dem Verhältnis der aktiven Elektrolytoberfläche F zur Länge L des Diffusionsraums. Welcher Öffnungsquerschnitt gewählt wird, hängt von dem vorgegebenen optimalen Arbeitsbereich des Sensors und von der zu messenden Konzentration ab.

Aufgrund der oben angegebenen Bedingungen ist gewährleistet, dass die Durchtrittsrate des Messgases durch die aus einer Vielzahl von Löchern bestehende Eintrittsblende einzig und allein von deren Gesamtöffnungsquerschnitt abhängt. Unter diesen Voraussetzungen ist die Durchtrittsrate dann nur durch den Partialdruck des zu messenden Gases bestimmt und hängt nur wenig von der Temperatur ab. Die Temperaturabhängigkeit lässt sich dadurch minimieren, dass die Einzelöffnungen konisch ausgebildet werden, so dass an der Grenze zum Diffusionsraum ein scharfkantiger Blendenrand vorhanden ist.

Der Einfluss der Diffusionsraumlänge wurde schon in der DE-PS 26 21 676 eingehend behandelt. Sie bestimmt einerseits die lokale Belastungsdichte des Sensors und andererseits die Ansprechzeit des Messsystems. Bei der vorliegenden Erfindung liegt jedoch ein Blendenkopf mit vorgegebener Diffusionsraumlänge zugrunde.

Der erfindungsgemässe Gasdetektor weist folgende Vorteile auf:

a) Beim Übergang von einem Messbereich zum anderen durch Auswechseln des Blendekopfes ändert sich, wie sich aus Versuchen ergab, das Zeitverhalten des Messsystems nicht. Ansprechzeit und Regenerationszeit bleiben erhalten.

b) Aufgrund der Tatsache, dass die auf den Sensor auftreffende Gaskonzentration unabhängig vom Messbereich immer in der gleichen nieeine ausgezeichnete Stabilität des Sensors über belastung des Sensors mit Sicherheit vermieden. Daraus resultiert eine lange Lebendsdauer und eine ausgezeichnete Stabilität des Sensor über einen langen Zeitraum. Unter Stabilität ist dabei zu verstehen, dass die Messempfindlichkeit keine Drift erfährt. Des weiteren hat sich gezeigt, dass hierdurch auch die Proportionalität zwischen Messsignal und Gaskonzentration gewährleistet bleibt.

c) Der Diffusionsraum zwischen Eintrittsblende und Sensoroberfläche stellt einen quasi geschlossenen Raum dar, der bei Verwendung eines flüssigen Messelektrolyten mit Elektrolytdampf gesättigt ist. Dieser mit Dampf gesättigte Raum schützt ähnlich wie ein Membransystem den Sensor vor einem Abdampfen der Elektrolytflüssigkeit und damit vor dem Austrocknen. Bei einer starken Verdampfung des Elektrolyten wird häufig das elektrochemische Gleichgewicht an der Sensoraberfläche (Dreiphasengrenze Gasraum-Elektrode-Elektrolyt) so stark gestört, dass Störsignale entstehen. Diese Fehlerquelle wird durch den erfindungsgemässen Blendenkopf mit Sicherheit vermieden.

d) Ein weiterer entscheidender und nicht ohne weiteres vorherzusehender Vorteil besteht darin, dass neben dem Zeitverhalten auch die Temperaturabhängigkeit des Messsystems beim Auswechseln des Blendekopfes unverändert bleibt. Anderenfalls müssten für genaue Messungen bei den einzelnen Messbereichen Nacheichungen in Abhängigkeit der Temperatur vorgenommen werden.

e) Da die Durchtrittsrate des Messgases durch die Eintrittsblende nur von dessen Partialdruck abhängt, ist bei gleicher Konzentration das Messsystem in erster Näherung unabhängig vom Gesamtdruck. Im Gegensatz zu den Membransystemen, die üblicherweise zur Messbereichseinstellung verwendet werden, treten an den Eintrittsblenden keine Druckausgleichsvorgänge auf.

f) Die ausserordentlich übersichtlichen physikalischen Verhältnisse hinsichtlich Temperatur- und Druckabhängigkeit sowie Zeitverhalten schaffen letzten Endes die technischen Voraussetzungen für eine rationelle Serienfertigung der elektrochemischen Messzelle. Für ein bestimmtes Messgas wird jeweils ein einheitlicher Sensor verwendet. Die Anpassung an den Konzentrationsbereich und damit an das jeweilige Messproblem geschieht in einfacher Weise durch Aufstecken eines anderen Blendenkopfes.

Im folgenden wird ein Ausführungsbeispiel der Erfindung anhand von Zeichnungen näher erläutert. Es zeigen:

Fig. 1 ein Messsystem mit einem elektrochemischen Sensor und einem Blendenkopf,

Fig. 2 einen Blendenkopf in Draufsicht,

Fig. 3 ein Blockschaltbild für die Signalverarbeitung und

Fig. 4 Empfindlichkeit des Messsystems als Funktion der Blendenöffnung.

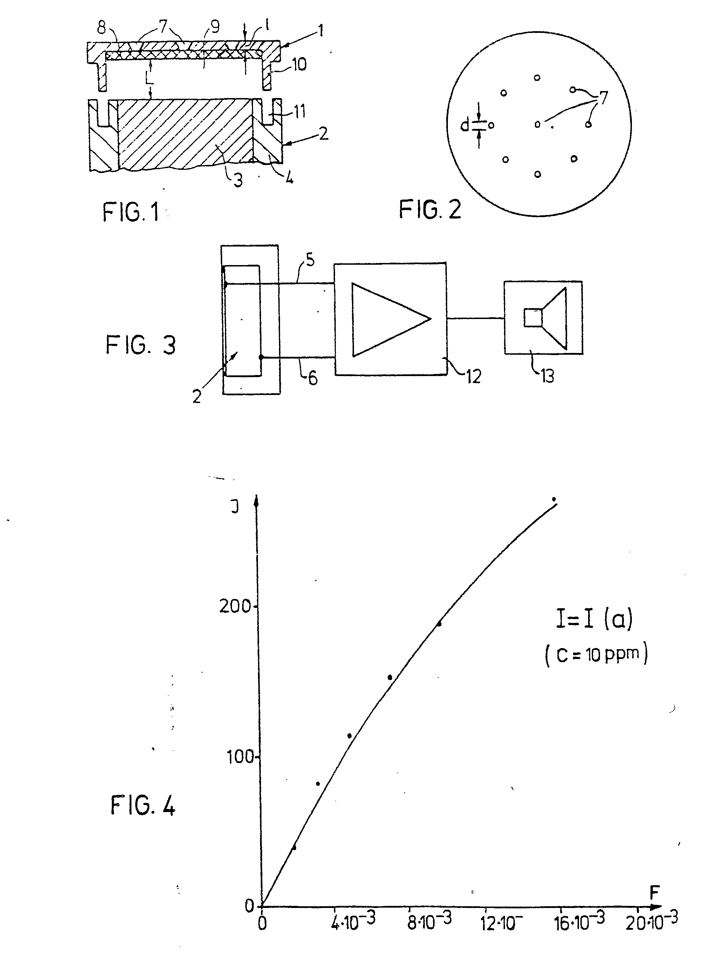

Der Messkopf gemäss Fig. 1 besteht im wesentlichen aus dem Blendenkopf 1 und der elektrochemischen Messzelle 2. Hauptbestandteil der elektrochemischen Messzelle ist ein organischer Feststoffelektrolyt 3, der in eine zylindrische Halterung 4 eingebettet ist. Der Elektrolyt ist z.B. in DE-C 24 36 261 (US-A 40 49 503) und 26 21 676 ausführlich beschrieben, so dass hier auf eine weitergehende Beschreibung verzichtet werden kann. An der dem Blendenkopf 1 zugewandten Seite ist der Elektrolyt 3 mit einer maschendrahtförmigen Metallelektrode 5 abgedeckt. Auf der gegenüberliegenden Seite befindet sich eine Gegenelektrode 6 (Fig. 3). Die Elektrode 5 bildet zusammen mit der Oberfläche des Elektrolyten 3 die für den Messvorgang kritische Dreiphasengrenze. Das zu messende Gas diffundiert aus dem Aussenraum durch die Blendenöffnungen 7 und eine in dem Blendenkopf 1 eingebaute Filtermembran 8 durch den Diffusionsraum 9 an die Dreiphasengrenze und wird im Elektrolyt 3 gelöst. Die Filtermembran 8 dient dazu, im Messgas befindliche Störkomponenten, für die der elektrochemische Sensor 2 eine ausgeprägte Querempfindlichkeit besitzt, zurückzuhalten. Eigenschaften und Aufbau solcher Sorptionsfilter sind ebenfalls in der DE-C 26 21 676 erläutert. Durch die elektrochemische Reaktion der Messkomponente an der Dreiphasengrenze wird ein Strom erzeugt, der im äusseren Schliessungskreis zwischen den Elektroden 5 und 6 gemessen werden kann.

Der Blendenkopf 1 ist mit einer Steckverbindung 10 versehen, die in entsprechende Aussparungen 11 in der Kunststoffhalterung 4 des Elektrolyten passt. Die Blendenöffnungen 7 werden durch kreisrunde Löcher (s. Fig. 2) gebildet. Die Länge l der Blendenöffnung ist klein im Vergleich zu ihrem Durchmesser d. Ausserdem ist ihr Durchmesser klein im Verhältnis zur Sensoroberfläche F, geteilt durch die Diffusionsraumlänge L. Praktisch wählt man

$$l \leq \frac{d}{10} \quad \text{und} \quad d \leq \frac{F}{10\,L}.$$

Typische Werte sind z.B.

$$d = 0,3 \text{ mm}, \quad F = 200 \text{ mm}^2, \quad L = 2 \text{ mm}.$$

Die kurze Länge l der Blende 7 beutet physikalisch, dass keine temperaturabhängige Kapillarströmung innerhalb der Blende auftreten kann. Zweckmässig ist aus diesem Grunde die Blendenöffnung in ihrer Längsrichtung konisch ausgebildet, so dass ein scharfkantiger Blendenrand entsteht. Durch die beschriebene Dimensionierung wird erreicht, dass die Durchtrittsrate des Messgases im Blendenkopf 1 nur durch den gesamten Öffnungsquerschnitt bestimmt wird und die Empfindlichkeit des Messkopfes annähernd eine lineare Funktion des Blendenquerschnittes ist (s. Fig. 4).

Fig. 3 zeigt ein Blockschaltbild für die Verwendung des Messkopfes in einem Gaswarngerät. Das durch die Reaktion der Gasmoleküle an der Dreiphasengrenze erzeugte elektrische Signal wird an den Elektroden 5 und 6 abgegriffen und einem Messverstärker 12 zugeführt. Bei Überschreitung eines vorgewählten Schwellwertes wird ein akustischer Alarm 13 ausgelöst.

Soll ein anderer Messbereich gewählt werden, so braucht lediglich der Blendenkopf 1 gegen einen anderen mit verändertem Öffnungsquerschnitt ausgetauscht werden. Zu diesem Zweck werden jeweils zu einem bestimmten elektrochemischen Sensor verschiedene Blendenköpfe mit abgestuftem Öffnungsquerschnitt mitgeliefert.

In Fig. 4 ist die Abhängigkeit der Empfindlichkeit des Messsystems von dem Öffnungsquerschnitt der Blenden dargestellt. Zu diesem Zweck wurde bei einer Messgaskonzentration von 10 ppm das Messsignal (Einheit nA) als Funktion der relativen Blendenfläche F

$$\left( \frac{\text{Blendenfläche}}{\text{Elektrodenfläche}} \cdot 10^{-3} \right)$$

gemessen. Es besteht annähernd ein linearer Zusammenhang zwischen Empfindlichkeit und Blendenöffnung. Der horizontale Abstand der Messpunkte entspricht dabei der Abstufung des Öffnungsquerschnittes. Aus dem Diagramm geht auch hervor, dass eine Anpassung des Messbereiches allein durch die Wahl der Blendenöffnung in weiten Grenzen möglich ist.

**Patentansprüche**

1. Gasdetektor mit einem Messkopf, der einen auf gegenüberliegenden Seiten mit Elektroden (5, 6) versehenen Elektrolyten und einen der einen Elektrode vorgeordneten Diffusionsraum (9) aufweist, welcher über eine Eintrittsblende (7) und eine Filtermembran (8) mit der zu überwachenden Gasatmosphäre in Verbindung steht, dadurch gekennzeichnet, dass eine der Zahl unterschiedlicher Messbereiche entsprechende Zahl auswechselbarer Blendenköpfe (1) vorgesehen ist, die jeweils mit einer Vielzahl von Öffnungen (7) versehen sind, deren Zahl und/oder Querschnitt den Gesamtöffnungsquerschnitt der Eintrittsblende bestimmen, deren Längsausdehnung

l klein ist im Vergleich zu ihrem Durchmesser d und deren Durchmesser d klein ist gegenüber dem Verhältnis der aktiven Elektrolytoberfläche F zur Länge L des Diffusionsraumes (9).

2. Gasdetektor nach Anspruch 1, dadurch gekennzeichnet, dass die Blendenöffnungen (7) konisch zulaufen, so dass an der Grenze zum Diffusionsraum (9) ein scharfkantiger Blendenrand vorhanden ist.

### Claims

1. A gas detector with a measuring head which has an electrolyte provided on opposite sides with electrodes (5, 6) and a diffusion chamber (9) arragend in front of the one electrode, which diffusion chamber is in communication with the gaseous atmosphere to be controlled via an inlet orifice plate (7) and a filter membrane (8), characterised in that a number of exchangeable orifice plate heads (1) is provided corresponding to the number of different measuring ranges, which orifice plate heads are in each case provided with a plurality of openings (7), the number and/or cross-section of which determine the total opening cross-section of the inlet orifice plate, the length l of which is small in comparison with the diameter d thereof and the diameter d is small in relation to the ratio of the active electrolyte surface F to length L the diffusion chamber (9).

2. A gas detector according to Claim 1, characterised in that the orifice plate openings (7) converge conically so that there is a sharp-edged orifice plate rim at the boundary formed with the diffusion chamber (9).

### Revendications

1. Détecteur de gaz avec une tête de mesure que comporte un électrolyte doté d'électrodes (5, 6) sur ses faces opposées, ainsi qu'une chambre de diffusion (9) disposée en amont de l'une des électrodes et communiquant par un diaphragme d'entrée (7) et une membrane filtrante (8) avec l'atmosphère gazeuse à surveiller, caractérisé par le fait qu'il est prévu un nombre de têtes de diaphragme interchangeables (1) correspondant au nombre de différentes plages de mesure, ces têtes présentant chacune plusieurs orifices (7) dont le nombre et/ou la section déterminent la section totale d'ouverture du diaphragme d'entrée, dont l'étendue longitudinale l est faible comparée leur diamètre d et dont le diamètre d est petit vis-à-vis du rapport entre la surface efficace F de l'électrolyte et la longueur L de la chambre de diffusion (9).

2. Détecteur de gaz selon la revendication 1, caractérisé par le fait que les orifices (7) du diaphragme ont une forme conique, de sorte que le diaphragme présente un bord à arête vive à la limite de la chambre de diffusion (9).

FIG. 1

FIG. 2

FIG. 3

FIG. 4

$I = I (a)$
$( C = 10 \, ppm )$